# EUROPÄISCHE PATENTSCHRIFT

(11) **EP 1 207 373 B1**
(45) Veröffentlichungstag und Bekanntmachung des Hinweises auf die Patenterteilung: **20.08.2008**
(21) Anmeldenummer: 01124080.1
(22) Anmeldetag: 10.10.2001
(51) Int. Cl.: G01D 5/39, G01F 23/00

(54) **Übertragungssystem für entfernte Sensoren**
Remote sensor communication system
Système de communication pour capteurs distants

(30) Priorität: 17.11.2000 DE 10057057
(43) Veröffentlichungstag der Anmeldung: 22.05.2002
(73) Patentinhaber: VEGA Grieshaber KG, 77709 Wolfach (DE)
(72) Erfinder: Gaiser, Martin, 72275 Alpirsbach (DE)
(74) Vertreter: Patentanwälte Westphal, Mussgnug & Partner

(56) Entgegenhaltungen:
- EP-A- 0 718 607
- DE-A- 4 334 994
- DE-U- 29 914 577
- GB-A- 2 335 523

## Beschreibung

Die vorliegende Erfindung betrifft eine Füllstandsensorvorrichtung gemäß den Merkmalen des Oberbegriffs des Anspruchs 1.

Eine solche Vorrichtung ist aus EP-A-0 718 607 bekannt.

Andere Messvorrichtungen sind aus DE 299 14 577 U1, GB 2 335 523 A und DE 43 34 994 A1 bekannt.

Sensoren befinden sich in einer Produktionsanlage oft an eine Vielzahl von Stellen verstreut, um Größen für die Steuerung des Produktionsprozesses zu messen. Die Messsignale der Sensoren müssen - häufig über beträchtliche Entfernungen - zu einer Leitwarte geführt werden, wo sie miteinander in Beziehung gesetzt und ausgewertet werden.

Um eine Verfälschung der Messsignale durch lange Übertragungswege bei mitunter geringer Signalamplitude zu vermeiden, werden für solche Überwachungsaufgaben oft Sensoreinheiten eingesetzt, die ein digitales Ausgangssignal liefern, da ein solches Signal auch über weite Strecken ohne Informationsverlust übertragbar ist. Die Verdrahtung von den Sensoreinheiten zur Leitwarte bleibt aber auch bei digitaler Übertragung aufwendig und kostspielig.

Ein weiteres Problem, das eine Besonderheit der digitalen Übertragung im Vergleich zur analogen darstellt, ergibt sich aus der willkürlichen Wählbarkeit der Formate für eine digitale Messwertdarstellung. Null- und Eins-Pegel können mit bestimmten Intervallen der Spannung oder der Stromstärke verknüpft sein; der Sender der Messwerte kann eine aktive eigene Strom- oder Spannungsquelle aufweisen, oder er kann passiv vom Empfänger über die Datenleitung mit Energie versorgt werden und durch Änderungen seiner Last auf dieser Leitung dem Empfänger verschiedene logische Zustände signalisieren. Eine übertragene Bitfolge kann einen reinen Messwert repräsentieren, oder sie kann zusätzlich zum Messwert Paritätsbits oder andere Typen von Fehlererkennungsinformation enthalten, etc. Folge dieser Willkürlichkeit ist, dass digitale Sensoreinheiten und Empfänger verschiedener Hersteller kaum zusammen einsetzbar sind, und dass, wenn ein Benutzer darauf angewiesen ist, Sensoreinheiten unterschiedlicher, nicht kompatibler Systeme einzusetzen, für alle getrennte Verdrahtungen, Empfänger etc. erforderlich sind.

Um das Problem des Verdrahtungsaufwandes zu lösen, wurde z. B. in EP 0 949 447 A1 ein Sensor zur Überwachung eines Dampfabscheiders vorgeschlagen, bei dem digitale Signale vom Sensor per Funk ausgestrahlt werden. Um die für die Funkübertragung benötigte Energie bereitzustellen, schlägt die Schrift ferner vor, den Sensor mit Solarzellen auszurüsten. Wo dies mangels ausreichender Beleuchtung nicht praktikabel ist, bleibt nichts anders übrig, als den Sensor - diesmal zur Energieversorgung - dennoch zu verdrahten.

Aufgabe der Erfindung ist, einen Sensor zur Erfassung von Prozessgrößen zu schaffen, der eine Übermittlung eines vom Sensor gewonnenen digitalen Messsignals an einen Empfänger in einer standardisierten Form mit einfachen, preiswert verfügbaren Mitteln erlaubt.

Diese Aufgabe wird durch eine Vorrichtung mit den Merkmalen des Anspruchs 1 gelöst.

Es wird also vorgeschlagen, den Sensor mit einer Schnittstelle für die Übermittlung des digitalen Signals in einem die Kommunikation zwischen einer Vielzahl von Benutzern unterstützenden Netzwerk auszurüsten. Derartige Netzwerke sind in den meisten Produktionsanlagen bereits vorhanden, z. B. in Form eines Telefonnetzes oder eines lokalen Rechnernetzes (LAN). Bei Zwischenschaltung eines solchen Netzes muss folglich nicht mehr vom Sensor bis zur Leitwarte verdrahtet werden, es genügt eine Verbindung vom Sensor bis zum nächsten Netzzugangspunkt.

Schnittstellen für solche Netze, Modems oder Netzwerkadapter, werden in großen Mengen hergestellt und sind preiswert verfügbar.

Bei den von Füllstandssensoren erfassten Behälterfüllständen handelt es sich um langsam veränderliche Größen, die von einer einzelnen Sensoreinheit gelieferte Datenrate ist gering. Daher können solche Sensoreinheiten in großer Zahl an das Netzwerk angeschlossen sein, ohne dass dessen Kapazität für seine ursprünglichen Aufgaben merklich beeinträchtigt wird.

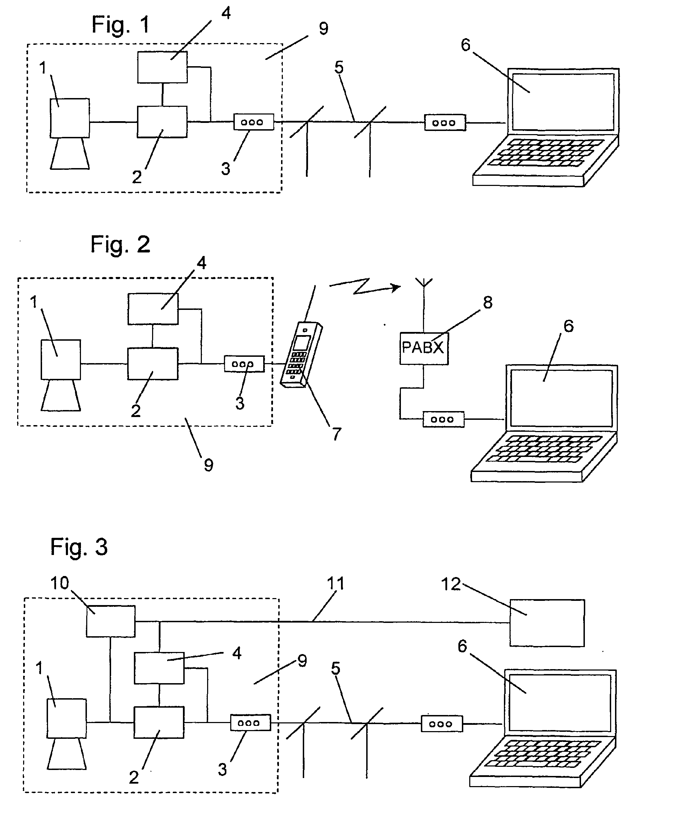

Figs. 1 und 2 zeigen jeweils eine erfindungsgemäße Sensoreinheit, angeschlossen an ein Telefonnetz.

An einen Signalausgang des Sensors 1 in Fig. 1, eines Füllstandssensors, ist ein Schnittstellenwandler 2 angeschlossen, der dazu dient, das analoge Ausgangssignal des Sensors 1 in ein digitales Signal einer von einem nachgeordneten Modem 3 verarbeitbaren Form, z. B. acht oder 16 Bit parallel mit TTL-Pegel, umzusetzen.

Eine Steuereinheit 4 ist parallel zu dem Schnittstellenwandler 2 an das Modem 3 angeschlossen. Diese Steuereinheit kann z. B. dazu dienen, in regelmäßigen Zeitabständen einen Befehl zum Aufbauen einer telefonischen Verbindung über das Modem 3 und das hier nur schematisch als eine Leitung dargestellte Telefonnetz 5 mit einer Leitwarte, z. B. einem Arbeitsplatzrechner 6, aufzubauen, der ebenfalls über ein Modem 3 mit dem Telefonnetz 5 verbunden ist, um einen aktuellen Messwert des Sensors 1 oder eine Mehrzahl von in einer Zeitspanne seit der letzten Verbindung gesammelten und zwischengespeicherten Messwerten an den Arbeitsplatzrechner 6 zu übertragen, oder dazu, einen von dem Arbeitsplatzrechner 6 aufgebauten Anruf entgegenzunehmen und von diesem empfangene Befehle wie z. B. einen Befehl zum Senden von Messwerten, zum Einstellen einer Empfindlichkeit des Sensors 1 oder von anderen Parametern des Sensors 1 oder der Schnittstellenschaltung 2 auszuführen.

Der Sensor 1, der Schnittstellenwandler 2, das Modem 3 und die Steuereinheit 4 sind in einer Baueinheit 9 zusammengefasst. Um diese Sensorbaueinheit 9 einzusetzen, genügt es, sie an einem Behälter oder dgl. zu montieren, wo ein Füllstand erfasst werden soll, und ein Anschlusskabel von der Sensorbaueinheit 9 zur nächsten Telefon-Anschlussdose zu legen. Für den Betrieb des Sensors 1 und der anderen Komponenten der Baueinheit benötigte Energie wird über die Anschlussleitung von der Telefon-Anschlussdose bezogen, so dass eine eigene Versorgungsleitung für die Stromversorgung nicht erforderlich ist.

Wie Fig. 2 zeigt, kann die gleiche Baueinheit 9 auch eingesetzt werden, um mit Daten mit Hilfe eines schnurlosen Telefon-Endgeräts 7, z. B. eines Geräts nach DECT-Standard, und einer an solche Geräte angepassten Nebenstellenanlage 8, an den Arbeitsplatzrechner 6 zu übertragen. Da bei dieser Variante keine Energieversorgung über die das Telefonnetz 5 möglich ist, wird eine (nicht gezeigte) leitungsgebundene Stromversorgung vorgesehen. Denkbar ist ferner, eine Sender-Empfänger-Einheit eines solchen Endgeräts mit in die Sensorbaueinheit zu integrieren.

Gemäß einer zweiten Ausgestaltung der Erfindung ist das Modem durch eine Schnittstelle für ein lokales Rechnernetz, insbesondere durch einen Ethernet-Adapter, ersetzt. Diese Ausgestaltung ist bevorzugt, wenn in kurzen Zeitabständen kleine Datenmengen zu übertragen sind, da hier die Datenübertragung paketorientiert erfolgt und der mit Zeit- und Signalisierungsaufwand verbundene vorherige Verbindungsaufbau entfällt.

Eine in Fig. 3 gezeigte dritte Ausgestaltung sieht vor, dass der Sensor zusätzlich zu dem Modem 3 für die Kommunikation über ein Telefonnetz eine zweite Schnittstelle 10 für die Kommunikation mit einem Netzwerk, basierend auf einem Feldbus 11 wie etwa HART, Profibus oder FF (Fieldbus Foundation) aufweist. Die Feldbusleitung dient zur Übertragung von von dem Sensor aufgenommenen Messwerten an einen Leitrechner 12, z.B. eine SPS (Speicherprogrammierbare Steuerung) oder ein PLS (Prozess-Leit-System). Die Steuereinheit 4 dient dann zur Überwachung beider Übertragungswege.

Die Kommunikation über die Telefonleitung wird bei dieser Ausgestaltung nur zum Abfragen und Setzen von Betriebsparametern des Sensors eingesetzt, z.B. im Rahmen von Fernparametrierung, -wartung oder -diagnose.

## Patentansprüche

1. Füllstandsensorvorrichtung zur Erfassung eines Füllstandes und zum Erzeugen eines für den Füllstand repräsentativen digitalen Signals, wobei eine Baueinheit (9) vorgesehen ist, innerhalb welcher ein Füllstandsensor (1) und eine Einrichtung zur Analog-Digital-Wandlung der vom Füllstandsensor (1) bereitgestellten Analogsignale und zur Ausgabe der dem Füllstand repräsentierenden digitalen Signale vorgesehen ist, **dadurch gekennzeichnet, daß** innerhalb der Baueinheit (9) eine erste Schnittstelle mit einem Schnittstellenwandler (2) mit nachgeschaltetem Telefon-Modem (3) vorgesehen ist, die erste Schnittstelle zum Abfragen und/oder Setzen von Funktionsparametern der Füllstandsensorvorrichtung vorgesehen ist, und dass innerhalb der Baueinheit (9) eine zweite Schnittstelle vorhanden ist zum Übertragen von von der Füllstandsensorvorrichtung aufgenommenen Messwerten zu einem lokalen Rechnernetz (LAN).

## Claims

1. A liquid level sensor device for detecting a liquid level and for generating a digital signal representative of the liquid level, wherein a structural unit (9) is provided, inside which there are provided a liquid level sensor (1) and a device for the analogue to digital conversion of the analogue signals provided by the liquid level sensor (1) and to output the digital signals representing the liquid level,
**characterised in that** inside the structural unit (9) there is provided a first interface with an interface converter (2) with a post-connected telephone modem (3), the first interface is provided to request and/or set function parameters of the liquid level sensor device,
**and in that** inside the structural unit (9) there is a second interface to transmit measured values recorded by the liquid level sensor device to a local computer network (LAN).

## Revendications

1. Dispositif de capteur de niveau de remplissage pour saisir un niveau de remplissage et générer un signal numérique représentant le niveau de remplissage, comportant une unité (19) munie d'un capteur de niveau de remplissage (1) et une installation de conversion analogique/numérique des signaux analogiques fournis par le capteur de niveau de remplissage (1) pour émettre les signaux numériques représentant le niveau de remplissage,
**caractérisé en ce qu'**
il est prévu une première interface dans l'unité (9), comportant un convertisseur d'interface (2) suivi d'un modem téléphonique (3),
la première interface étant prévue pour interroger et/ou pour fixer des paramètres de fonctionnement du dispositif de capteur de niveau de remplissage et
à l'intérieur de l'unité (9), une seconde interface transmet les valeurs de mesure prises par le dispositif de capteur de niveau de remplissage vers un réseau de calculateur local (LAN).
